# EUROPÄISCHE PATENTSCHRIFT

(11) **EP 1 432 576 B1**
(45) Veröffentlichungstag und Bekanntmachung des Hinweises auf die Patenterteilung: **08.06.2011**
(21) Anmeldenummer: 02777224.3
(22) Anmeldetag: 26.09.2002
(51) Int. Cl.: B32B 29/02, D21H 27/30

(54) **SICHERHEITSPAPIER**
SECURITY PAPER
PAPIER DE SURETE

(30) Priorität: 28.09.2001 DE 10148122
(43) Veröffentlichungstag der Anmeldung: 30.06.2004
(73) Patentinhaber: Giesecke & Devrient GmbH, 81677 München (DE)
(72) Erfinder: BÖHM, Michael, 85551 Kirchheim-Heimstetten (DE); PLASCHKA, Reinhard, 86949 Windach (DE); KRETSCHMAR, Friedrich, 81929 München (DE)
(74) Vertreter: Klunker . Schmitt-Nilson . Hirsch
(86) Internationale Anmeldenummer: PCT/EP2002/010815
(87) Internationale Veröffentlichungsnummer: WO 2003/029003

(56) Entgegenhaltungen:
- EP-A- 0 453 131
- EP-A- 0 667 248
- DE-A- 19 907 697
- GB-A- 796 447
- GB-A- 2 260 772
- US-A- 964 014
- US-A- 0 061 321
- US-A- 4 313 984

## Beschreibung

Die Erfindung betrifft Wertdokumente, wie Banknoten, Schecks, Pässe, Ausweiskarten oder dergleichen mit erhöhter Umlauffähigkeit, Sicherheitspapier zu deren Herstellung, sowie ein Verfahren zur Herstellung dieses Sicherheitspapieres und derartiger Wertdokumente.

Banknoten werden üblicherweise aus so genannten Sicherheitspapieren gefertigt, die aus Baumwollfasern bestehen und besondere Sicherheitsmerkmale, wie mit Stichtiefdruck gedruckte Motive, Hologrammpatches und Wasserzeichen aufweisen. Die Umlaufdauer einer Banknote hängt von der Beanspruchung ab. Bestimmte Stückelungen werden im Handel bevorzugt benutzt und weisen damit aufgrund der stärkeren Belastung durch Umwelteinflüsse eine geringere Umlaufzeit auf. Bei den Umwelteinflüssen handelt es sich beispielsweise um den Angriff verschiedener chemischer Stoffe, wie z.B. Schweiß, Fett, Öl, Laugen, Säuren etc. Insbesondere kleinere Notenwerte unterliegen einer verstärkten Abnutzung. Als Hauptursache für die eingeschränkte Umlaufzeit von Banknoten gilt neben der frühzeitigen Verschmutzung das Einreißen der Banknote im Randbereich.

In der US 3 661 700 wird ein beschichtetes, verstärktes Papier beschrieben, das dadurch hergestellt wird, dass eine Unterlage aus einem Netz aus einem längsorientierten Polypropylenfilm mit einem Gemisch cellulosehaltiger Fasern und/oder anderen Fasern und mineralischen und/oder organischen Pigmenten oder Füllstoffen sowie Bindemitteln beschichtet wird. Da das Netz zur Verstärkung dient, muss es die gleichen Abmessungen wie das damit zu verstärkende Papier haben.

Die britische Patentschrift 3453 beschreibt ein Papier für Banknoten, Wertpapiere und dgl., welches ein feines, offenmaschiges Gewebe mit oder ohne Figuren, Muster oder Zahlen enthält. Das offenmaschige Gewebe wird dadurch in das Papier eingearbeitet, dass das Gewebe in den Papierbrei geleitet wird, während der Brei auf seinem Weg vom Auftragsbottich zu den Druckwalzen über ein Sieb bewegt wird, bevor er die Druckwalzen erreicht, so dass das Gewebe in den fließfähigen Papierbrei eingepresst werden kann. Auch in diesem Fall hat das Gewebe die gleichen Abmessungen wie das Papier.

Die britische Schrift 1219 643 bezieht sich auf die Herstellung von verstärktem Papier, wobei ein netzartiges oder maschenförmiges Verstärkungsmaterial nach verschiedenen Methoden eingearbeitet wird. Das Verstärkungsmaterial hat die gleichen Abmessungen wie das Papier.

In der AU-PS 488,652 wurde beispielsweise vorgeschlagen, Banknoten vollständig aus einem Kunststoffsubstrat zu fertigen. Diese Kunststoffsubstrate weisen zwar einen höheren Einreißwiderstand als Papiersubstrate auf, der Durchreißwiderstand des Kunststoffsubstrates ist im Vergleich zum Papiersubstrat jedoch extrem gering. Weiterhin muss im Fall der Kunststoffbanknote auf die üblichen und bewährten Sicherheitselemente, wie Portrait-Wasserzeichen und Fenstersicherheitsfaden verzichtet werden. Auch die im Banknotenbereich übliche Bedruckung im Stahltiefdruck, der aufgrund des durch den Farbauftrag entstehenden Reliefs als zusätzliches taktiles Echtheitskennzeichen dient, führt auf Kunststoffsubstraten lediglich zu einem flachen, kaum spürbaren Relief.

Die eben beschriebenen Sicherheitspapiere gemäß Stand der Technik weisen zudem den gemeinsamen Nachteil auf, dass durch das Einarbeiten eines vollflächigen Netzes bzw. durch das Verwenden eines Kunststoffsubstrates die besonderen Eigenschaften, wie Klang und Griffigkeit des Banknotenpapiers, vollständig verloren gehen.

Die Aufgabe der Erfindung besteht daher darin, ein Wertdokument herzustellen, das einen erhöhten Einreißwiderstand aufweist und daher eine hohe Umlaufdauer gewährleistet, und das in seinen übrigen typischen Eigenschaften, wie Bedruckbarkeit, Klang, Farbe etc. unverändert bleibt.

Des Weiteren besteht die Aufgabe der Erfindung, ein Sicherheitspapier bereitzustellen, aus dem die erfindungsgemäßen Wertdokumente hergestellt werden können sowie Verfahren zur Herstellung der erfindungsgemäßen Sicherheitspapiere und Wertdokumente bereitzustellen.

Die Lösung dieser Aufgabe ergibt sich aus den unabhängigen Ansprüchen. Weiterbildungen sind Gegenstand von Unteransprüchen.

Gemäß der Erfindung wird das Wertdokumen lediglich im Randbereich des Wertdokumentes wenigstens in einem Kantenbereich zumindest teilweise mit einer Verstärkung versehen, die ein Einreißen des Wertdokumentes verhindert oder zumindest deutlich zeitlich verzögert gegenüber Wertdokumenten nach dem Stand der Technik.

Unter Kantenbereich ist dabei nicht nur die eindimensional ausgedehnte Kante selbst des Wertdokuments sondern auch der zweidimensional ausgedehnte Randbereich, der an die Kanten angrenzt, zu verstehen. Die exakten Abmessungen sind dabei vom Fachmann im Einzelfall zu ermitteln. Dabei erstreckt sich der verstärkte Kantenbereich parallel zu den Kanten des Wertdokuments.

An die Art des Sicherheitspapiers, aus dem die Wertdokumente gefertigt werden, sind keine Bedingungen geknüpft, so dass übliche Sicherheitspapiere aus Fasern von Einjahrespflanzen, insbesondere Baumwollfasern verwendet werden können, aber auch Sicherheitspapiere, die zumindest teilweise aus Kunststofffasern, vorzugsweise Polyamidfasern bestehen.

Die Verstärkung kann dabei nur an einem Teil mindestens eines Kantenbereichs, aber auch über die gesamte Länge mindestens eines Kantenbereichs verlaufen. Vorzugsweise ist ein Kantenbereich über seine gesamte Länge mit der Verstärkung versehen. Besonders bevorzugt sind die gegenüberliegenden Kantenbereiche, insbesondere die in Längsrichtung des Wertdokuments, verstärkt oder, falls es das Herstellungsverfahren erlaubt, sind alle Kantenbereiche des Wertdokuments verstärkt. Die Ausdehnung der Verstärkung längs und quer zum Wertdokument ist dabei so zu bemessen, dass einerseits ein optimaler Schutz der Kanten gewährleistet ist, andererseits aber die besonderen Eigenschaften des Wertdokuments weit gehend erhalten bleiben.

Die örtliche Lage der Verstärkung in Bezug auf die zu schützenden Kanten des Wertdokuments kann dabei auf verschiedene Weise realisiert werden. Zum einen ist es möglich, dass die in oder auf das Papier ein- bzw. aufgebrachte Verstärkung bündig mit der Papierkante abschließt. Andererseits kann die Verstärkung auch bezogen auf den verstärkten Kantenbereich um bis zu 5 mm eingerückt sein, d.h. die Verstärkung schließt nicht bündig mit der Kante des Wertdokuments ab, sondern das Papier steht über die Verstärkung hinaus. Die Abmessung des über die Verstärkung hinausragenden Papieranteils hängt unter anderem vom Verwendungszweck des Papieres, von der Papierart und/oder des Beanspruchungsgrades ab. In jedem Falle kann die noch zu tolerierende Breite des überstehenden Papierabschnittes, bei der der erfindungsgemäße Zweck gewahrt wird, vom Fachmann ermittelt werden. Neben der Möglichkeit, die Verstärkung einzurücken, kann die Verstärkung auch über den zu verstärkenden Kantenbereich des Sicherheitspapieres hinausragen. In diesem Fall bestehen die verstärkten Kanten des Wertdokuments nicht aus Papier, sondern einem anderen Material.

Die bündig abschließende, die eingerückte wie auch die überstehende Variante der Verstärkung kann dabei jeweils in das Papier eingebettet, d.h. in das Volumen des Wertdokuments zumindest teilweise eingebracht, oder auf das Papier aufgebracht werden. Bei den auf das Papier aufgebrachten Varianten besteht weiterhin die Möglichkeit, die Verstärkung nur auf einer, also der Vorder- oder Rückseite des Sicherheitspapiers aufzubringen, oder aber auf der Vorder- und Rückseite die Verstärkung vorzusehen. Wird eine Verstärkung auf der Vorder- und Rückseite angebracht, kann diese aus identischem Material sein oder aber gemäß den nachstehenden Möglichkeiten selbstverständlich auch unterschiedlich ausgestaltet sein.

Je nach Verwendungszweck können die oben genannten Möglichkeiten, die Verstärkung örtlich im Wertdokument zu positionieren, auch untereinander kombiniert werden. So kann z.B. eine relativ zur Papierkante eingerückte und parallel zu einer ersten Längsseite des Sicherheitselementes eingelagerte Verstärkung mit einer über die zweite Längsseite überstehenden und auf das Papier aufgebrachten Verstärkung kombiniert werden. Zusätzlich könnten die beiden kurzen Seiten eines rechteckigen Wertdokuments mit einer in das Papier oder aber auf das Papier aufgebrachten bündig abschließenden Verstärkung geschützt sein. Erfindungsgemäß verlaufen die Verstärkungen parallel zur Längskante des Wertdokuments, da sie am Sicherheitspapier im kontinuierlichen Verfahren vorgesehen werden können. Andere Varianten, die gegebenenfalls am fertig geschnittenen Papier vorgenommen werden, sind ebenso möglich, aber aufwändiger in der Herstellung.

Die Art der Verstärkung kann auf eine Vielzahl von Möglichkeiten realisiert werden. Zur besseren Übersicht werden die einzelnen Varianten danach gegliedert, ob die Verstärkung auf das Papier aufgebracht oder in das Papier eingebettet wird. Eine weitere Unterteilung ergibt sich danach, ob die Verstärkung auf der Vorder- und/ oder Rückseite, eingerückt, bündig oder überstehend verarbeitet ist und ob die Möglichkeit besteht, die Verstärkung an einer, mehreren, allen Seiten oder nur an gegenüberliegenden Seiten zu realisieren.

Das Prinzip des Einreißschutzes ist dabei für alle folgend beschriebenen Varianten grundsätzlich dasselbe. Die z.B. durch Stoßen, Knicken bzw. aktives Einreißen gefährdeten Kanten von Wertdokumenten, insbesondere Banknoten, werden mit Hilfe einer Verstärkung vor übermäßig starker mechanischer Beanspruchung geschützt. Besonders effektiv sind die Verstärkungen, die bündig mit der Wertdokumentkante abschließen oder sogar darüber hinausragen, da in diesem Falle die gefährdeten Kanten vor mechanischen Angriffen vollständig abgeschirmt sind. Aber auch die Variante, bei der die Verstärkung relativ zur Wertdokumentkante eingerückt ist, bietet ausreichend Schutz. Versucht man, eine so ausgerüstete Banknote zu beschädigen, leistet die eingerückte Verstärkung deutlich Widerstand gegen ein weiteres Einreißen, so dass der Kantenbereich nicht zerstört werden kann. Im Sinne der Erfindung kann der Einreißschutz auch nur auf die Bereiche beschränkt sein, in denen die Banknoten besonderen Belastungen ausgesetzt sind, beispielsweise im Bereich der Knickfaltungen.

### Variante A) Lackverstärkter Kantenbereich

Der Begriff "Lack" steht im Sinne der Erfindung für alle flüssigen, pastenförmigen oder viskosen Substanzen, die sich als Druckfarbe, Beschichtungsmasse oder Imprägniermaterial eignen. Für die Applikation kommen prinzipiell alle Druck- und Papierstreichverfahren sowie alle Verfahren zur partiellen Aufbringung oder Übertragung der Substanzen auf ein Substrat, wie z.B. Papier infrage.

Bei der auf einem Lack basierenden Verstärkung wird der Lack auf bzw. in das Sicherheitspapier auf- bzw. eingebracht, z.B. per Druck- oder Beschichtungsverfahren. Je nach Einstellung der Lackeigenschaften und je nach Art der Applikationsmethode wird das Papier entweder in den zu verstärkenden Bereichen mit dem Lack oberflächlich beschichtet oder sogar regelrecht mit dem Lack getränkt, so dass nicht nur eine auf der Oberfläche vorliegende, sondern auch in das Volumen des Papiers eingearbeitete Verstärkung vorliegt.

Die Lackverstärkung kann dabei so verarbeitet werden, dass die Verstärkung bündig mit der zu verstärkenden Papierkante abschließt oder aber auch entsprechend eingerückt ist.

Erfindungsgemäß laufen die Abmessungen des verstärkten Papierbereichs parallel zu den Kanten des Wertdokuments, d.h. das Papier weist eine band- bzw. streifenförmige Verstärkung auf. Denkbar ist aber auch, den verstärkten Bereich keilförmig oder trapezförmig auszubilden.

Es kann lediglich eine Seite, also Vorder- oder Rückseite des Papiers, aber selbstverständlich auch eine Bearbeitung beider Papierseiten erfolgen.

Im Hinblick auf die zu verstärkenden Kantenbereiche stehen alle Möglichkeiten offen. So kann z.B. nur ein Teil eines Kantenbereichs, aber auch der Kantenbereich über die gesamte Papierlänge verstärkt werden. Ebenso gut kann man mehrere Kantenbereiche verstärken, unabhängig von deren Lage zueinander. Die verstärkten Kantenbereiche liegen allerdings vorzugsweise gegenüber und betreffen die Längsseiten des Sicherheitspapieres, so dass im fertigen Wertdokument die größtmögliche Kantenlänge und am meisten beanspruchten Kanten geschützt sind. Die Lackverstärkung weist vorzugsweise eine Breite von ca.1 bis 20 mm, besonders vorzugsweise von 2 bis 10 mm, insbesondere bevorzugt von 5 mm auf.

Als Lack können wasser- oder lösemittelbasierende Ein- aber auch Mehrkomponentensysteme eingesetzt werden. Geeignet sind Lacke auf Basis von natürlichen und synthetischen Bindemitteln, Styrolbutadienlatex, Acryllatex, gummihaltigen Strichmassen, Emulsionspolymerisaten, Zwei-Komponenten-Polyurethanen, Dispersionen etc. Bei dem Lack handelt es sich vorzugsweise um eine härtbare Harzzusammensetzung, die beispielsweise chemisch oder strahlungshärtend, vorzugsweise UV-härtend ist.

Der Lack benetzt die Fasern im Oberflächenbereich des Papiers und bildet einen geschlossenen Oberflächenfilm über der Faser. Damit wird der Zusammenhalt zwischen den einzelnen Fasern maximiert und zugleich als positiver Nebeneffekt der Schmutzzugang zur Faser minimiert.

Soll der Lack in das Papier eindringen, kann dies auf verschiedenste Art und Weise optimiert werden.

Beispielsweise kann mittels einer Laser- oder Coronabehandlung eine gezielte Öffnung der Papieroberfläche erreicht werden, so dass der aufgebrachte Lack leichter in das Papier eindringt. Dabei kann die Laser- bzw. Coronabehandlung so geführt werden, dass von einem leichten Aufrauen der Papieroberfläche bis hin zur Perforation des Papiers alle Zwischenstufen eingestellt werden können.

Weiterhin kann im Bereich der Verstärkung ein Wasserzeichen in das Papier eingearbeitet sein. Im Bereich des Wasserzeichens weist das Papier dünnere und dickere Stellen auf. Wird das Papier in diesem Bereich lackiert, kann der Lack im Bereich der dünnen Papierstellen leichter in das Papier eindringen. Der so verstärkte Bereich wird hierbei regelrecht plastifiziert. Denkbar ist dabei eine ein- aber auch beidseitige Lackierung. Je nach Beschaffenheit des Lackes und des Papiers und des gewünschten Verstärkungseffektes reicht gegebenenfalls eine einseitige Lackierung aus, da bei sehr dünnen Papierstellen im Wasserzeichenbereich ein optimales Eindringen oder sogar vollständiges Durchdringen, sprich Durchschlagen des Lacken auf die andere Seite erreicht wird. Besonders erleichtert wird das Eindringen des Lackes im Bereich eines so genannten Highlight-Wasserzeichens. Hierbei handelt es sich um ein Wasserzeichen, das im Durchlicht betrachtet besonders helle Bereiche, d.h. besonders dünne Papierbereiche aufweist. Die Lackierung kann nur im Bereich des Wasserzeichens, zumal der eigentliche Verstärkungseffekt im Sinne der Erfindung im Bereich des Wasserzeichens am stärksten ausfällt.

Im Wertdokument, beispielsweise einer Banknote, kann sich das Wasserzeichen entlang aller Kanten oder nur an ausgewählten Kanten oder Kantenteilstücken befinden. Es kann sowohl eingerückt zur Kante oder auch abschließend mit der Kante verlaufen.

Der Lack wird auf das Sicherheitspapier nach seiner Herstellung, also auf die Papierbahn oder den Papierbogen aufgerakelt oder aufgedruckt. Der Aufdruck des Lacks erfolgt vorzugsweise im Siebdruck- oder Flexodruckverfahren. Dies kann direkt im Anschluss an die Papierherstellung in der Papiermaschine oder in einem separaten Arbeitsgang, beispielsweise direkt vor oder nach dem Schneiden und/oder Bedrucken des Sicherheitspapiers erfolgen.

Anschließend wird das erfindungsgemäße Sicherheitspapier entsprechend dem herzustellenden Wertpapier bedruckt und eventuell weiterverarbeitet. Der Lack muss dabei so auf das Sicherheitspapier aufgebracht und das so behandelte Sicherheitspapier so geschnitten werden, dass im herzustellenden Wertdokument die Lackverstärkung an den gewünschten Stellen positioniert ist.

Möchte man also ein Wertdokument mit den Längskanten bündig abschließenden Verstärkungen, wird der Lack auf das Sicherheitspapier in parallelen Streifen aufgebracht, wobei die Streifen entsprechend breit und zueinander beabstandet sind. Der Schnitt des Sicherheitspapiers erfolgt dann z.B. entlang der Mittellinien der Lackstreifen und im rechten Winkel dazu.

Soll ein Wertdokument hergestellt werden, dessen Verstärkungen relativ zu dessen Kanten eingerückt sind, müssen ebenfalls parallel verlaufende Lackstreifen auf das Papier aufgebracht werden, wobei die Lackstreifen abwechseln weit und eng beabstandet sind. Der weitere Abstand gibt dabei die Breite des Wertdokuments vor, der engere Abstand die Breite des über die Verstärkung hinausragenden Papierstreifens. Der Schnitt erfolgt entlang der Mittellinie, die zwischen den eng beabstandeten Streifen verläuft, und im rechten Winkel dazu.

Gemäß einer bevorzugten Ausführungsform enthält der Lack zusätzlich in geringer Konzentration wenigstens einen Zusatzstoff mit einer visuell und/ oder maschinell nachweisbaren physikalischen Eigenschaft. Der Zusatzstoff kann beispielsweise magnetische, elektrisch leitfähige, lumineszierende, lichtbeugende, lichtpolarisierende oder lichtinterferierende Eigenschaften aufweisen. Beispielsweise kann es sich um Interferenzschicht- oder Flüssigkristallpigmente oder andere Effektpigmente, wie glänzende Metalleffektfarbpigmente etc., oder um Lumineszenzstoffe handeln, die mit UV-Licht anregbar sind und im visuellen Spektralbereich emittieren. Im Falle einer maschinellen Überprüfung können jedoch auch im unsichtbaren Spektralbereich, vorzugsweise im IR-Spektralbereich emittierende Lumineszenzstoffe verwendet werden. Ebenso sind photochrome oder thermochrome Zusätze denkbar.

Der Zusatzstoff kann vollflächig in der gesamten Beschichtung gleichmäßig verteilt vorliegen oder in Form von Mustern aufgebracht werden. Zur Erzeugung der Muster wird in einem ersten Schritt eine Zusammensetzung in Form eines bestimmten Musters aufgedruckt, die in geringen Mengen in der Art einer Dotierung (< 1 Gew.%) zumindest einen Zusatzstoff mit wenigstens einer visuell und/ oder maschinell nachweisbaren physikalischen Eigenschaft enthält. Erst in einem zweiten Schritt wird registerhaltig zu dem ersten Muster der verbleibende Teil der Oberfläche des Papiers mit der gleichen Zusammensetzung, die allerdings den nachweisbaren Zusatzstoff nicht enthält, versehen.

Statt physikalisch nachweisbaren Stoffen können allerdings auch chemisch reagierende Zusatzstoffe verwendet werden. Beispielsweise kann eine Komponente eines Farbreaktionssystems dem Lack beigemischt werden. Bringt man zu einem späteren Zeitpunkt die zweite Komponente des Farbreaktionssystems auf, so wird auf dem Sicherheitspapier ein farbiger Bereich, Muster, Schriftzug oder dergleichen sichtbar. Dies kann als Echtheitsmerkmal dienen oder auch als Entwertungskennzeichen eines Schecks, Tickets oder dergleichen.

Durch die Verwendung mehrerer Zusatzstoffe und/oder eine Variation der Konzentration eines oder mehrerer Zusatzstoffe können sehr einfach beliebige Codierungen, beispielsweise in Form eines Barcodes, auf dem Sicherheitspapier erzeugt werden. Diese Codierung kann beispielsweise ein eigenständiges zusätzliches Sicherheitsmerkmal darstellen oder als Vergleichsmerkmal für andere bereits auf dem Sicherheitspapier vorgesehene Daten dienen.

Nach dem erfindungsgemäßen Prinzip können selbstverständlich auch mehrere unterschiedliche Codierungen erzeugt werden. Hierbei werden beispielsweise gleichzeitig oder nacheinander die den jeweiligen Zusatzstoff enthaltenden Lacke auf das Papier in Form der gewünschten Codierungen aufgebracht. Alternativ können die verschiedenen Codierungen auch auf unterschiedlichen Oberflächen des Sicherheitspapiers angeordnet werden. Eine beidseitige Beschichtung mit dem gleichen Zusatzstoff ist selbstverständlich ebenfalls möglich.

In einer besonders bevorzugten Ausführungsform ist der Lack transparent bzw. der Farbe des Sicherheitspapieres angepasst, so dass der verstärkte Bereich mit bloßem Auge nicht bzw. so gut wie nicht wahrgenommen werden kann.

### Variante B) Folienverstärkter Kantenbereich

Bei der auf Folienmaterial basierenden Verstärkung wird das Folienmaterial wenigstens teilweise auf das Papier aufgebracht bzw. in das Papier eingebettet.

Das Folienmaterial kann dabei so verarbeitet werden, dass die Verstärkung bündig mit der zu verstärkenden Papierkante abschließt oder aber auch entsprechend eingerückt ist. Bei dieser Ausführungsform besteht weiterhin die Möglichkeit, dass das Folienmaterial über die zu verstärkende Kante des Papieres hinausragt.

Bei der Variante mit dem auf das Papier aufgebrachten Folienmaterial kann Vorder- und/oder Rückseite des Papiers mit Folienmaterial ausgestattet werden.

Im Hinblick auf die zu verstärkenden Kantenbereiche stehen in Abhängigkeit vom Herstellungsverfahren verschiedene Möglichkeiten offen. Werden die Verstärkungen auf das Papier auflaminiert, so kann z.B. ein Teil eines Kantenbereichs, aber auch der Kantenbereich über die gesamte Papierlänge verstärkt werden. Ebenso gut kann man mehrere Kantenbereiche verstärken, unabhängig von deren Lage zueinander. Die verstärkten Kantenbereiche liegen allerdings vorzugsweise gegenüber und betreffen die Längsseiten des Wertdokuments, so dass im fertigen Wertdokument die größtmögliche Kantenlänge und am meisten beanspruchten Kanten geschützt sind.

Werden die Folienverstärkungen in das Papier eingebettet, erfolgt dies bei der Papierherstellung. Die Herstellung des Sicherheitspapieres erfolgt üblicherweise auf einer Rundsiebmaschine, der das Folienmaterial im Bereich des Stoffzulaufes zugeführt wird, so dass bei der Blattbildung das Folienmaterial mit in das Blatt eingearbeitet wird. Das Herstellungsverfahren kann nun so geführt werden, dass das Folienmaterial vollständig in das Papier eingebettet wird, als Fensterfaden ausgestaltet ist oder in Form eines die einzelnen Papierstreifen trennenden Streifens eingearbeitet ist Um einen verbesserten Zusammenhalt zwischen Papier und Folienmaterial zu gewährleisten kann das Folienmaterial zusätzlich kleberbeschichtet sein. Beim Zuschnitt der fertigen Papierbahn kann der Schnitt so geführt werden, dass das Folienmaterial im fertigen Wertdokument bündig mit der Papierkante abschließt, eingerückt ist öder über die Papierkante übersteht. Wird bandförmiges Folienmaterial, also z.B. streifenförmiges Material eingearbeitet, läuft das Folienmaterial normalerweise parallel mit der Faserrichtung des Papieres mit Folglich werden je nach Zuschnitt in der Schmalbahn bzw. der Breitbahn eine oder maximal zwei, nämlich die jeweils parallelen Kantenbereiche die Folienverstärkung aufweisen. Um im fertigen Wertpapier, z.B. einer Banknote, in allen Kantenbereichen ins Papier eingebettete Verstärkungen zu erzielen, werden vorzugsweise gitterförmige Verstärkungen in das Sicherheitspapier eingelagert werden. Unter gitterförmigen Verstärkungen sind flächige Gebilde zu verstehen, die mit einem grobmaschigem Gitter vergleichbar sind, wobei die Maschenweite dieses Gitters z.B. ungefähr der Größe des Wertpapieres entspricht. Das Gitter selbst wird beispielsweise aus streifenförmigen Folienmaterial aufgebaut, wobei die einzelnen Streifen parallel und senkrecht zueinander verlaufen.

Dabei laufen die Abmessungen des verstärkten Papierbereichs parallel zu den Kanten des Sicherheitspapieres, d.h. das Papier weist eine band- bzw. streifenförmige Verstärkung auf.

Unter Folienmaterial im Sinne der Erfindung ist jedes geeignete Material zu verstehen, das den Einreißwiderstand des Wertdokuments im Kantenbereich erhöht. Der Begriff "Folienmaterial" soll dabei keine Beschränkung auf Kunststoffmaterialien bedeuten, obwohl diese bevorzugt verwendet werden. Vielmehr soll angedeutet werden, dass es sich bei dem Folienmaterial um ein relativ dünnes Material handeln sollte, so dass das Erscheinungsbild des Sicherheitpapieres bzw. des Wertdokuments sowie deren Eigenschaften, insbesondere im Hinblick auf seine Bearbeitbarkeit, nicht negativ beeinträchtigt werden. Eine Verwendung dickeren Materials ist jedoch nicht generell ausgeschlossen.

Bei dem Folienmaterial handelt es sich vorzugsweise um reißfeste Materialien, vorzugsweise Folien aus Kunststoff, Metall oder Kunststoff-Metall-Laminate. Je nach Verwendungsart ist das Folienmaterial transparent ausgestaltet bzw. der Farbe des Sicherheitspapieres bzw. Wertdokuments angepasst, so dass das Folienmaterial möglichst unauffällig ist oder, soweit möglich, mit bloßem Auge so gut wie nicht wahrnehmbar ist. Für besondere Verwendungen, insbesondere in Ausführungsformen, in denen die Verstärkung an der Oberfläche des Sicherheitspapieres sichtbar ist, ist das Folienmaterial gegebenenfalls mit weiteren Sicherheitsmerkmalen, wie Hologrammen, Kinegrammen ® oder anderen Beugungsstrukturen, aber auch Druckfarben, die Interferenzschicht- oder Flüssigkristallpigmente oder andere Effektpigmente, wie glänzende Metalleffektfarbpigmente etc. enthalten, ausgestattet. Zusätzlich können die Übergänge von Folienmaterial zu Papier mit einem Druckmuster, insbesondere im Stichtiefdrucktechnik überdruckt werden. Zusätzlich oder alternativ kann das Folienmaterial mit den unter Variante A) beschriebenen Zusatzstoffen ausgerüstet werden.

Handelt es sich um einen reinen Kunststofffaden, wird als Folienmaterial bevorzugt Polyester eingesetzt, bei den Metallfolien wird mit Aluminium beschichtete Kunststofffolie bevorzugt.

In einer weiteren Variante bestehen die Folienverstärkungen aus einer oder mehreren Schichten, die im Transferverfahren übertragen wurden. Vorzugsweise handelt es sich hierbei um Verstärkungen mit Prägehologrammen, die im Wesentlichen aus einer geprägten Kunststoffschicht, einer Metallschicht und einer Klebstoffschicht bestehen.

Ebenso gut kann es sich bei dem Folienmaterial auch um netzartige Gebilde handeln. Diese netzartigen Gebilde können aus Natur-, Kunst- und/ oder Glasfasern bestehen, wobei die Fasern vorzugsweise miteinander verschweißt, verklebt, verwoben oder verflochten sind. Falls gewünscht, können die Gebilde entsprechend eingefärbt werden. Hierfür bietet sich ein Bedrucken, Aufsprühen oder Aufdampfen, insbesondere Vakuumaufdampfen, vorzugsweise unter Verwendung geeigneter Masken, an. Die Kunststofffasern können mit einem Durchmesser von wenigen µ hergestellt werden. Bevorzugt ist ein Faserdurchmesser zwischen ca. 1 µ und ca. 40 µ.

Für die Ausstattung mit zusätzlichen Sicherheitsmerkmalen und Zusatzstoffen gelten die unter Variante A) beschriebenen sowie die für das eben beschriebene Folienmaterial beschriebenen Möglichkeiten im gleichen Maße.

### Variante C) Mittels Spezialfasern verstärkter Kantenbereich

Eine weitere Möglichkeit, Kantenbereiche von Wertdokumenten zu verstärken besteht darin, bei der Papierherstellung in den gefährdeten Bereichen Spezialfasern einzuarbeiten.
i) Zum einen handelt es sich um Fasern, die eine im Vergleich zu den für das Grundsubstrat verwendeten Fasern erhöhte Reißfestigkeit aufweisen, ohne dass eine weitere Behandlung der Fasern vor oder nach der Einbringung in die Papiermasse notwendig wäre. Eine zusätzliche Vor- oder Nachbehandlung ist damit aber nicht ausgeschlossen. Bei diesen Spezialfasern handelt es sich insbesondere um Synthesefasern oder um Synthesefasern, die als Endlosfäden in die Papierbahn eingebracht werden, oder um besonders lang ausgebildete Fasern von mehreren mm Länge, die in die Papiermasse eingebracht sind. Selbstverständlich können auch endlos ausgebildete Synthesefasern und Mischungen von endlosen Synthesefasern mit lang ausgebildeten Fasern eingesetzt werden.
   Die Faserverstärkung kann dabei so in das Sicherheitspapier eingearbeitet werden, dass die Verstärkung im fertigen Wertdokument bündig mit der zu verstärkenden Papierkante abschließt, eingerückt ist oder aber auch entsprechend übersteht
   Dabei laufen die Abmessungen des verstärkten Papierbereichs parallel zu den Kanten des Sicherheitspapieres, d.h. das Papier weist eine band- bzw. streifenförmige Verstärkung auf. Die räumliche Anordnung der Verstärkung und der Schnitt des Sicherheitspapieres erfolgt nach ähnlichem Prinzip wie unter der Variante A) beschriebenen Ausführungen.
   Die Spezialfasern können z.B. im Bereich des Stoffauflaufes über einen separaten Zulauf der Papiermasse zugeführt werden. Einerseits kann der Zufluss der Spezialfasern so geregelt werden, dass im Bereich des Zuflusses die Papiermasse, die die ursprünglichen "normalen" Fasern enthält, mit den Spezialfasern angereichert wird, andererseits können die Spezialfasern im Bereich des Zuflusses die "normalen" Fasern zu 100% ersetzen.
ü) Zum anderen handelt es sich bei den Spezialfasern um Fasern, die durch Mahlung so vorbearbeitet werden, dass bei der eigentlichen Papierherstellung in dem Bereich, in dem diese Fasern verwendet werden, ein dichtes, festes Blatt mit erhöhtem Einreißwiderstand gebildet wird. Hierzu kann eine schmierige Mahlung durchgeführt werden, so dass die Fasern gequetscht und defibrilliert werden. Dies bewirkt eine Hydratisierung der Faser und Vergrößerung der spezifischen Oberfläche. Die Berührungsflächen der Fasern im Blatt erhöhen sich beträchtlich, so dass sich Wasserstoffbrücken bilden können, die die Festigkeit des Fasergefüges hervorrufen. Alternativ kann auch ein chemisches Mahlen der Fasern erfolgen, d.h. man verwendet Zusatzstoffe, die beim Mahlen wie Schmiermittel wirken, den Kontaktbereich zwischen den Fasern erhöhen und eine innige Berührung zwischen Fasern und Fibrillen auf molekularer Skala hervorbringen. Die Wahl der Mahlung, des Mahlgrades und der Mahldauer sowie der spezifischen Bedingungen zur Erhöhung der Festigkeit des Faserverbundes sind den jeweils verwendeten Fasern anzupassen und vom Fachmann zu bestimmen.
   Die so vorbehandelten Fasern können örtlich und technisch wie die Spezialfasern unter i) in das Sicherheitspapier eingearbeitet werden. Die Spezialfasern können dabei aus der gleichen Faserart, wie für das Grundsubstrat verwendet, bestehen oder davon verschieden sein. Werden beispielsweise Baumwollfasern verwendet, kann das gesamte Wertdokument aus Baumwollfasern bestehen, im Bereich der Verstärkung liegen jedoch Baumwollfasern, die einer besonderen Mahlung unterzogen worden sind, vor.
iii) Weiterhin handelt es sich bei den Spezialfasern um Fasern, die nach der Einarbeitung in das Papier bei dessen Herstellung einer Nachbehandlung ausgesetzt werden und durch diese Nachbehandlung eine erhöhte Reißfestigkeit erlangen. Bei den Fasern kann es sich z.B. um thermoplastische Fasern handeln, die durch Wärmeeinwirkung miteinander verschmolzen werden. Denkbar ist aber auch jeder andere chemische oder physikalische Prozess, der ein Vernetzen, Verschmelzen, Verschweißen, Verkleben etc. der eingesetzten Fasern bewirkt. Beispielsweise kann durch Verleimung, Einwirken von Lösungsmitteln oder Auslösen chemischer Vernetzungsreaktionen die gewünschte Verstärkung erzielt werden.
   Die Fasern, die einer Nachbehandlung bedürfen, können örtlich und technisch wie die Spezialfasern unter i) in das Sicherheitspapier eingearbeitet werden. Neben der Möglichkeit, die Fasern nur im Bereich der Verstärkung in das Papier einzubringen, kann das Sicherheitspapier ganzflächig mit diesen Spezialfasern ausgestattet sein, wobei die Nachbehandlung nur lokal in den zu verstärkenden Randbereichen erfolgt. Eine ganzflächige Behandlung hat gegenüber dieser lokal beschränkten Behandlung den großen Nachteil, dass das zu bearbeitende Papier in seiner ganzen Oberfläche externen Einflüssen, wie z.B. einer Hitzebehandlung mittels Heizrolle, ausgesetzt und so ganzflächig stark beeinträchtigt wird. Im Gegensatz hierzu wird erfindungsgemäß lediglich der Randbereich behandelt, wobei unter Einsparung von Energie, Chemikalien, Zeit und somit Kosten ein effektiver Einreißschutz gewährleistet wird. Liegt beispielsweise eine Papierbahn mit streifenförmig eingearbeiteten Spezialfasern vor, die thermisch vernetzt werden können, kann nach der Papierherstellung mittels einer entsprechend schmalen Heizrolle, einem Laser, einer Infrarotquelle etc. die benötigte Wärmeenergie ebenso in Streifenform leicht auf das Papier übertragen werden.

Die Spezialfasern unter i) bis iii) können zusätzlich mit den unter der Variante A) beschriebenen Zusatzstoffen ausgerüstet werden, wobei es möglich ist, durch Kombination von Zusatzstoffen eine Codierung in den Kantenbereich des Wertdokuments einzuarbeiten. Beispielsweise könnten durch getrennten Zulauf unterschiedlich ausgerüsteter Fasern zur Papiermasse zwei in einem Kantenbereich nebeneinander liegende und parallel laufende Streifen erzeugt werden. Handelt es sich bei den Fasern um Fasern mit z.B. unterschiedlichen Lumineszenzeigenschaften, kann so eine Art einfacher Balkencode generiert werden. Denkbar wäre auch, die Codierung über unterschiedliche Breite der Streifen zu ergänzen. Die Spezialfasern unter i) bis iii) können zudem nicht nur einzeln, sondern auch in jeder denkbaren Kombination oder Mischung eingesetzt werden.

### Variante D) Weitere Komponenten zur Förderung der Langlebigkeit

Zusätzlich zu der Verstärkung der Kantenbereiche kann die Langlebigkeit des Sicherheitspapieres weiter erhöht werden, wenn folgende Maßnahmen einzeln oder in Kombination vorgenommen werden:
i) Üblicherweise wird bei der Herstellung von Sicherheitspapier, insbesondere von Banknotenpapier, als Basissubstrat ein Papier mit einem Gewicht von 90 bis 95 g/m² verwendet. Bei den erfindungsgemäßen Sicherheitspapieren kann stattdessen ein dickeres Papier mit z.B. 100g/m² eingesetzt werden. Allein auf Grund des höheren Flächengewichts und der damit höheren Dicke des Papieres wird bereits eine Verstärkung des Sicherheitspapieres erreicht, ohne dass im Wesentlichen die insbesondere bei Banknoten erwünschten Eigenschaften verschlechtert werden.
ii) Der Einsatz von beidseitigem Stahldruck am Sicherheitspapier erhöht die Verdichtung und damit die Stabilität des Papiersubstrates.
iii) Das Sicherheitspapier, aber vor allem das bedruckte Sicherheitspapier kann zum Schutz des Druckes und des Papieres vor Verschmutzung zusätzlich ablackiert werden. Die Lackschicht wird hierbei vorzugsweise in ihrer Zusammensetzung auf die, falls vorhanden, erfindungsgemäße Lackschicht abgestimmt, um einen guten Verbund der beiden Schichten zu ermöglichen. Eventuell kann der Verbund durch einen zusätzlichen Vernetzungsschritt noch verbessert werden. Dies kann durch Wärmeeinwirkung oder Bestrahlung (z.B. mit UV-Strahlung) erfolgen.

Die Varianten A) bis D) sind einzeln aber auch in beliebiger Kombination zur Erhöhung der Langlebigkeit, insbesondere des Einreißwiderstandes, einsetzbar.

Das erfindungsgemäße Sicherheitspapier kann beispielsweise auch vorteilhaft für die Herstellung von Ausweiskarten und Pässen verwendet werden. Da es eine erhöhte Reißfestigkeit und Schmutzbeständigkeit aufweist, kann unter Umständen auf die übliche Laminierung mit Kunststofffolien verzichtet werden. Damit entfällt ein aufwändiger Zusatzschritt, wodurch eine erhebliche Zeit- und Kostenersparnis erreicht werden.

Auf Grund des erhöhten Einreißwiderstandes bei gleichzeitig hohem Durchreißwiderstand von Papier stellt die vorliegende Erfindung ein äußerst langlebiges Sicherheitspapier zur Verfügung. Betrachtet man den europäischen und nordamerikanischen Raum unter Nichtberücksichtigung tropischer Zonen, kann die Umlaufdauer einer erfindungsgemäßen Banknote zum Teil mehr als das Dreifache der Umlaufdauer einer herkömmlichen Banknote betragen.

Im Folgenden werden einige Beispiele für das erfindungsgemäße Sicherheitspapier erläutert:

### Beispiel 1 Folienverstärkter Kantenbereich (Netzförmiges Gebilde)

Ein quadratisches Gittergewebe aus 5 µ dicken Polypropylenfasern mit einer Maschenweite von 0,1 mm wird bei der Herstellung von Banknotenpapier während des Schöpfprozesses in Form von Bändern im Abstand von 10 cm und mit allseitiger Überdeckung in das Papiermaterial eingebracht. Die Polypropylenfasern sind in einer dem Papier nahe kommenden Farbe eingefärbt.

### Beispiel 2 Folienverstärkter Kantenbereich (Streifenförmige Kunststofffolie)

3 mm breite und 15 µm dicke transparente Polyesterstreifen werden abwechselnd im Abstand von 6 und 1 cm auf die Trommel einer Rundsiebmaschine zugeführt, so dass die Folienstreifen bei der Blattbildung in das Papier eingebettet werden. Im Anschluss an die Fertigstellung der Papierbahn wird diese mittig zwischen den 1 cm beabstandeten Folienstreifen und im rechten Winkel dazu im Abstand von 12 cm geschnitten. Es entsteht ein 12 cm x 7 cm großes Wertdokument mit zwei parallel zu den Längskanten verlaufenden und hierzu um 0,5 cm eingerückten Folienverstärkungen.

### Beispiel 3 Mittels Kunststofffasern verstärkter Kantenbereich

Spezialfasern, nämlich Polyamidfasern, und Baumwollfasern werden in einer Willcox-Anlage so verarbeitet, dass eine Papierbahn hergestellt wird, die im Abstand von 6 cm verlaufende Streifen mit einer Breite von 2 cm aufweist, und die Faserzusammensetzung dieser Streifen nicht 100 % Baumwollfasern, sondern 50 % Baumwollfasern und 50 % Synthesefasern beträgt. Im übrigen Bereich der Papierbahn liegen 100 % Baumwollfasern vor. Die Papierbahn wird nach der Herstellung gegebenenfalls bedruckt und so geschnitten, dass Banknoten mit einer Länge von 16 cm und einer Breite von 8 cm entstehen, wobei die Kunststofffaserverstärkung entlang der Längskanten der Banknote und bündig dazu verläuft.

Weitere Vorteile und Ausführungsformen werden anhand der Figuren näher erläutert. Es wird darauf hingewiesen, dass die Figuren lediglich schematisch den Schichtaufbau des erfindungsgemäßen Sicherheitspapiers bzw. Wertdokuments darstellen. Dabei zeigt
- Fig.1: ein erfindungsgemäßes Wertdokument in Aufsicht,
- Fig. 2 und 3: einen Schnitt entlang A - A durch das erfindungsgemäße Wertdokument gemäß Fig. 1,
- Fig. 4 und 5: weitere Ausführungsformen erfindungsgemäßer Wertdoku- mente in Aufsicht,
- Fig. 6a: eine Aufsicht auf einen Ausschnitt aus einem erfindungsgemä- ßen Sicherheitspapier,
- Fig. 6b: einen Schnitt entlang B-B durch das erfindungsgemäße Si- cherheitspapier gemäß Fig. 6a,
- Fig. 7a: eine Aufsicht auf einen Ausschnitt aus einem erfindungsgemä- ßen Sicherheitspapier,
- Fig. 7b: einen Schnitt entlang B-B durch das erfindungsgemäße Si- cherheitspapier gemäß Fig. 7a,
- Fig. 8a: eine Aufsicht auf einen Ausschnitt aus einem erfindungsgemä- ßen Sicherheitspapier,
- Fig. 8b: einen Schnitt entlang B-B durch das erfindungsgemäße Si- cherheitspapier gemäß Fig. 8a,
- Fig. 9: die schematische Darstellung einer Doppelrundsieb-Papier- maschine zur Herstellung eines Sicherheitspapieres.

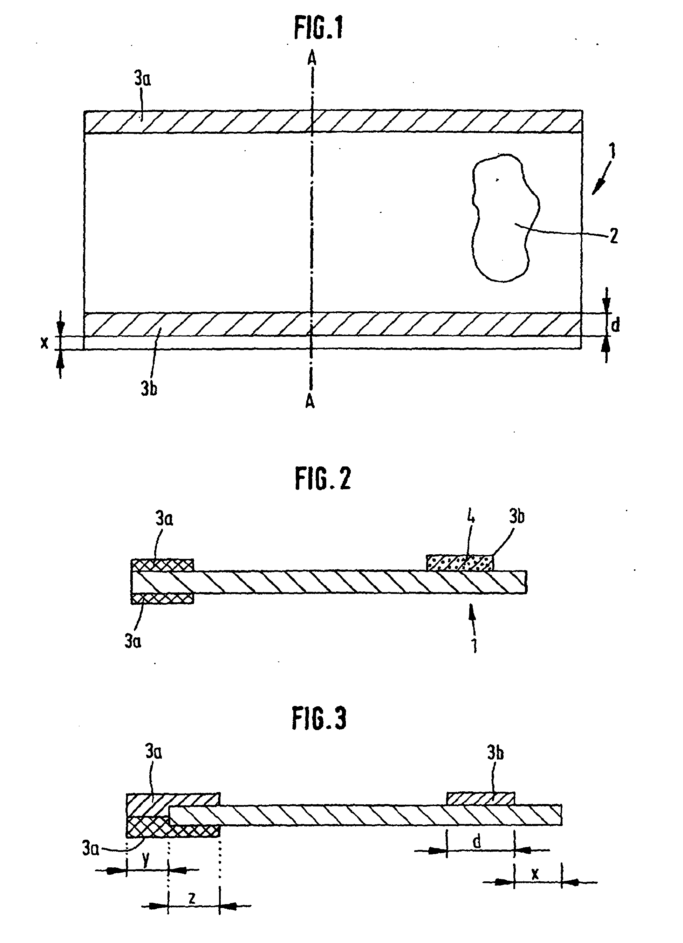

Fig.1 zeigt ein erfindungsgemäßes Wertdokument 1. Ein derartiges Wertdokument wird üblicherweise aus Baumwollfasern oder anderen Fasern von Einjahrespflanzen hergestellt. Für manche Anwendungen kann es jedoch auch sinnvoll sein, einen Teil dieser natürlichen Fasern durch Kunststofffasern, insbesondere Polyamidfasern zu ersetzen. Während der Herstellung des Sicherheitspapiers 7 werden bereits die in Fig.1 gezeigten erfindungsgemäßen Verstärkungen 3a, 3b in das Papier eingebettet. Falls gewünscht, werden während der Herstellung zusätzlich einzelne Sicherheitselemente, wie beispielsweise ein Portrait-Wasserzeichen 2 eingearbeitet. Bei den Verstärkungen 3a, 3b kann es sich um jede der Varianten A) bis C) handeln. Im vorliegenden Fall wurde das Wertdokuments 1 mit einer bündig abschließenden Verstärkung 3a am oberen Rand und mit einer eingerückten Verstärkung 3b am unteren Rand versehen. Vorzugsweise sind die Verstärkungen jedoch symmetrisch ausgebildet, d.h. entweder sind beide Verstärkungen eingerückt oder bündig zur Kante des Wertdokuments ausgerichtet. Die Breite d der Verstärkungen richtet sich unter anderem nach dem zu verarbeitendem Material für die Verstärkungen und dem gewünschten Anwendungszweck. Je reißfester das Material für die Verstärkungen ist, um so schmäler kann die Verstärkung ausfallen. Bei Verwendung von Kunststoffstreifen, insbesondere Polyester, reicht die Breite d vorzugsweise von 1 bis 10 mm, besonders bevorzugt von 2 bis 3 mm. Der Abstand x der Verstärkung zu der Kante des Wertdokuments richtet sich ebenfalls nach den verwendeten Materialien. Dabei bewegt sich "x" zwischen 0 und 5 mm, wobei Werte zwischen 0 und 2 mm bevorzugt sind. Die Werte für "d" und "x" sind in jedem Falle so auszuwählen, dass der erfindungsgemäße Zweck, nämlich eine Verstärkung der Kantenbereiche erfüllt ist. Diese Werte können vom Fachmann durch entsprechende Versuche ermittelt werden.

Fig. 2 zeigt einen Schnitt durch das erfindungsgemäße Wertdokument 1 entlang der strichpunktierten Linie A - A in Fig. 1. Bei den in der in Fig. 2 gezeigten Ausführungsformen der erfindungsgemäßen Verstärkungen 3a, 3b handelt es sich um Lackverstärkungen, die vollflächig in zwei streifenförmigen Bereichen des Wertdokuments 1 aufgerakelt oder aufgedruckt wurden. Die Verstärkung 3a wurden hierbei beidseitig auf das Sicherheitspapier 7 aufgebracht. Der Lack der Verstärkung 3b ist zusätzlich mit einem Zusatzstoff 4 dotiert, der visuell und/oder maschinell prüfbar ist. Bei dem Zusatzstoff kann es sich beispielsweise um einen unter normaler Beleuchtung transparenten Lumineszenzstoff handeln, der bei Bestrahlung mit UV-Licht im visuellen Spektralbereich emittiert und somit einen intensiven Farbton zeigt. In diesem Fall ist die Lumineszenz lediglich unter UV-Beleuchtung sichtbar. Es können allerdings auch mehrere Zusatzstoffe vorgesehen werden, die einzeln nachweisbar sind. Hierbei kann über das Mischungsverhältnis der Zusatzstoffe z.B. eine Codierung erzeugt werden.

Fig. 3 zeigt einen Schnitt durch ein dem in Fig.1 vergleichbaren Wertdokument 1 entlang der strichpunktierten Linie A - A. Bei den in der in Fig. 3 gezeigten Ausführungsformen der erfindungsgemäßen Verstärkungen 3a, 3b handelt es sich um Folienverstärkungen, die in zwei streifenförmigen Bereichen des Wertdokuments 1 aufgebracht, z.B. aufgeklebt sind. Die Verstärkung 3a wurden hierbei beidseitig auf das Sicherheitspapier 7 aufgebracht und zwar so, dass das Folienmaterial über die Kante des fertigen Wertdokuments hinausragt. Die Breite y der überragenden Folie sowie die Breite z des Überlapps richten sich nach den eingesetzten Verstärkungsmaterialien. Die Werte für "*y*" bewegen sich vorteilhafterweise im Bereich von ca 0,1 bis 10 mm, der Wert für "z" sollte mindestens ca.1 mm vorzugsweise 5 mm betragen. Bei dem Folienmaterial in der Fig. 3 handelt es sich um Kunststofffolien aus Polyester. Die Breite d der Verstärkung 3a beträgt dabei 7 mm mit "z" gleich 5 mm und "y' gleich 2 mm. Die Breite d der Verstärkung 3b beträgt 3 mm mit "x" gleich 2 mm. Das Folienmaterial kann zusätzlich mit einem Zusatzstoff 4 dotiert sein, der visuell und/oder maschinell prüfbar ist. Beispielsweise lässt sich die Folie auch mit zusätzlichen optischen Sicherheitselementen wie Hologrammen, Kinegrammen ® oder anderen Beugungsstrukturen, aber auch Druckfarben, die Interferenzschicht- oder Flüssigkristallpigmente oder andere Effektpigmente, wie glänzende Metalleffektfarbpigmente, irisierenden Pigmenten etc. enthalten, ausstatten.

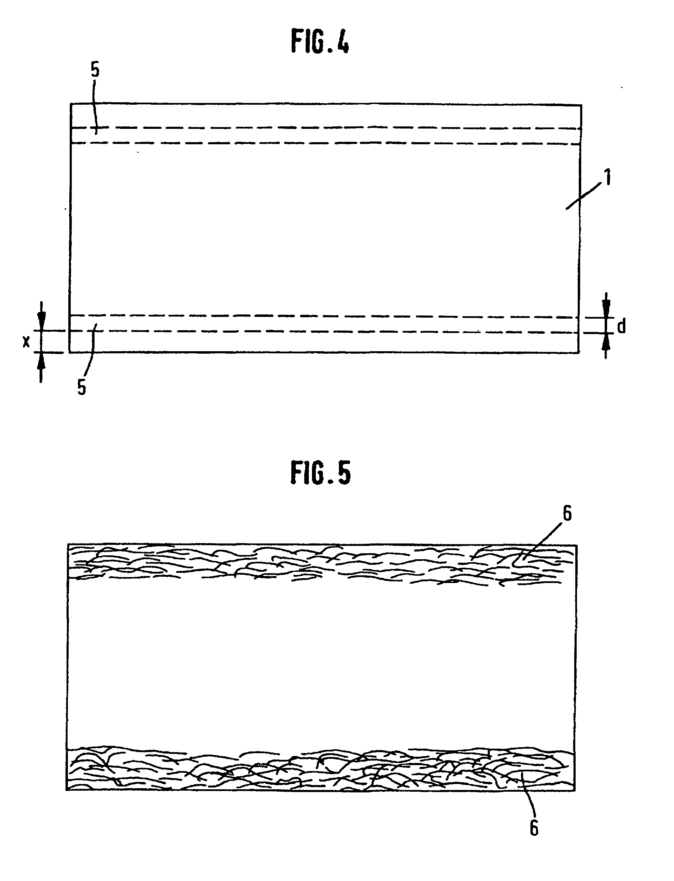

Fig. 4 zeigt ein erfindungsgemäßes Wertdokument 1, in das streifenförmiges Folienmaterial 5 bereits bei der Papierherstellung mit eingearbeitet wurde. Dieses Folienmaterial 5 wird quasi in das Papier eingebettet, so dass es in den strichliert gezeichneten Bereichen vollständig in die Papiermasse eingebettet ist. Dieser Streifen kann mit beliebigen maschinenlesbaren Sicherheitsmerkmalen, wie einer elektrisch leitenden, metallischen Schicht oder dergleichen versehen sein. Vorzugsweise handelt es sich jedoch um ein Polyesterband, das transparent ausgestaltet ist oder in der Farbe des Sicherheitspapieres 7 bzw. Wertdokument 1 gehalten ist, so dass es möglichst wenig bis nicht sichtbar ist. Die Folienstreifen dieser Ausführungsform sind ca. 2 bis 3 mm breit (d) und ca. 2 bis 3 mm (x) von der Kante des Wertdokuments eingerückt. Die Dicke der Folie reicht von ca.10 bis 50 µm, und beträgt bevorzugt ca.15 µm.

Fig. 5 zeigt ein erfindungsgemäßes Wertdokument 1, in das bündig abschließend mit der Kante des Wertdokuments bereits bei der Papierherstellung Synthesefasern 6 mit eingearbeitet wurden. Bei den Synthesefasern handelt es sich um Polypropylenfasern. Die Breite d der Verstärkung mittels Synthesefasern weist vorteilhafterweise einen Wert zwischen 0,5 und 10 mm auf.

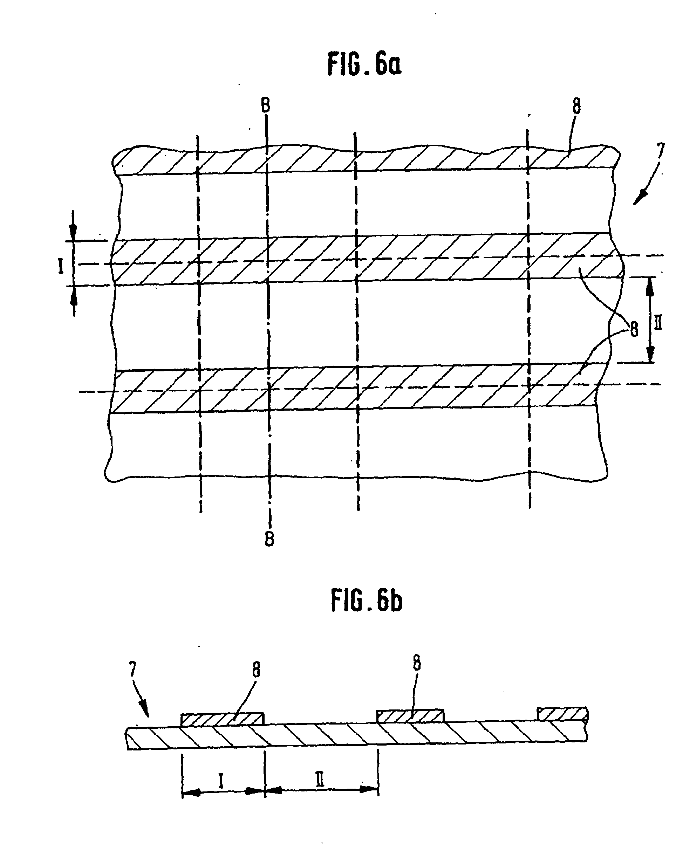

Fig. 6a zeigt einen Ausschnitt aus einer erfindungsgemäßen Sicherheitspapierbahn 7, wie sie beispielsweise für die Herstellung von Banknoten verwendet wird. Auf die Papierbahn 7 wurden nach der Papierherstellung streifenförmige Verstärkungen 8 auf die Vorderseite der Papierbahn aufgebracht. Bei den Verstärkungen 8 kann es sich zum Beispiel um auflaminierte Kunststofffolien, eine aufgedruckte Lackschicht oder eingelagerte Spezialfasern handeln. Die Breite der Verstärkungen auf der Papierbahn muss dabei doppelt so groß sein, also 2 x d, wie die in der fertig geschnittenen Note gewünschte Breite d. Die Ziffer I bezeichnet dabei den Bereich, in dem die Verstärkungen mit dem Papier überlappen, und die Ziffer II bezeichnet den Bereich, in dem das Papier ohne Verstärkung vorliegt. Beim Schneiden der Papierbahn 7 entlang der gestrichelten Linien ergeben sich z. B. Banknoten, die an den Längskanten parallel entlang laufende und bündig damit abschließende Verstärkungen aufweisen.

Fig. 6b zeigt einen Schnitt durch die erfindungsgemäße Sicherheitspapierbahn 7 entlang der strichpunktierten Linie B - B in Fig. 6a.

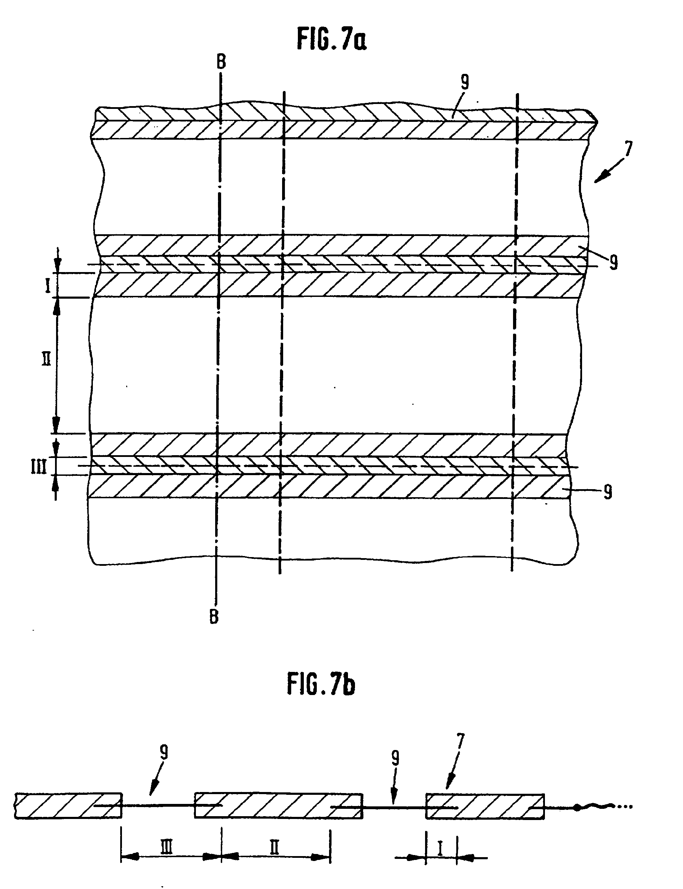

Fig. 7a zeigt einen Ausschnitt aus einer erfindungsgemäßen Sicherheitspapierbahn 7, wie sie beispielsweise für die Herstellung von Banknoten verwendet wird. In die Papierbahn 7 wurden bei der Papierherstellung streifenförmige Verstärkungen 9 in die Papierbahn eingebettet. Bei den Verstärkungen 9 kann es sich zum Beispiel um streifenförmige Kunststofffolien mit z.B. perforierten Rändern oder netzförmige Gebilde handeln. Die Breite der Verstärkungen auf der Papierbahn muss dabei doppelt so groß sein, also 2 x d, wie die in der fertig geschnittenen Note gewünschte Breite d. Die Ziffer I bezeichnet dabei den Bereich, in dem die Verstärkungen in das Papier eingebettet sind, die Ziffer II bezeichnet den Bereich, in dem das Papier ohne Verstärkung vorliegt, und die Ziffer III bezeichnet den Bereich, in dem nur die Verstärkung vorliegt. Beim Schneiden der Papierbahn 7 entlang der gestrichelten Linien ergeben sich z.B. Banknoten, die an den Längsseiten parallel entlanglaufende und die über die Längskanten der Banknote hinausragende Verstärkungen aufweisen.

Fig. 7b zeigt einen Schnitt durch die erfindungsgemäße Sicherheitspapierbahn 7 entlang der strichpunktierten Linie B - B in Fig. 7a.

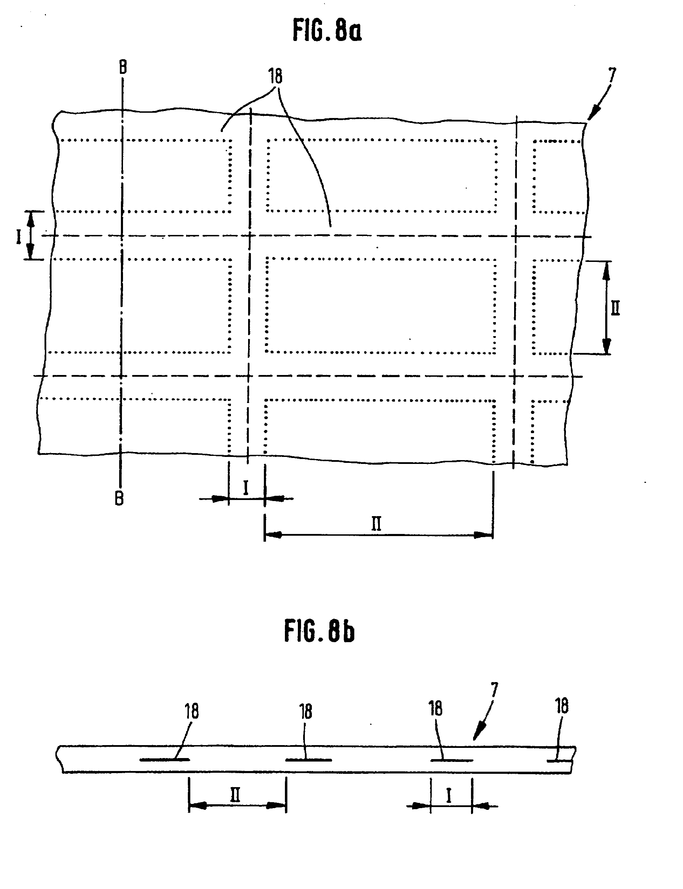

Fig. 8a zeigt einen Ausschnitt aus einer erfindungsgemäßen Sicherheitspapierbahn 7, wie sie beispielsweise für die Herstellung von Banknoten verwendet wird. In die Papierbahn 7 wurde bereits bei der Papierherstellung eine gitterförmige Verstärkung 18 in die Papierbahn eingebettet, so dass diese in den gepunktet gezeichneten Bereichen vollständig in die Papiermasse eingebettet ist. Die gitterförmige Verstärkung 18 kann z.B. aus vorstehend beschriebenem Folienmaterial, vorzugsweise aus Kunststofffolien oder netzartigen Gebilden bestehen. Die gitterförmige Verstärkung kann mit beliebigen maschinenlesbaren Sicherheitsmerkmalen, wie einer elektrisch leitenden, metallischen Schicht oder dergleichen versehen sein. Die Breite der Verstärkungen auf der Papierbahn muss dabei doppelt so groß sein, also 2 x d, wie die in der fertig geschnittenen Note gewünschte Breite d. Die Ziffer I bezeichnet dabei den Bereich, in dem die Verstärkungen in das Papier eingebettet sind, die Ziffer II bezeichnet den Bereich, in dem das Papier ohne Verstärkung vorliegt. Beim Schneiden der Papierbahn 7 entlang der gestrichelten Linien ergeben sich z.B. Banknoten, die an allen Seiten, also den Längs- und Querseiten, entlanglaufende und bündig damit abschließende Verstärkungen aufweisen.

Fig. 8b zeigt einen Schnitt durch die erfindungsgemäße Sicherheitspapierbahn 7 entlang der strichpunktierten Linie B - B in Fig. 8a.

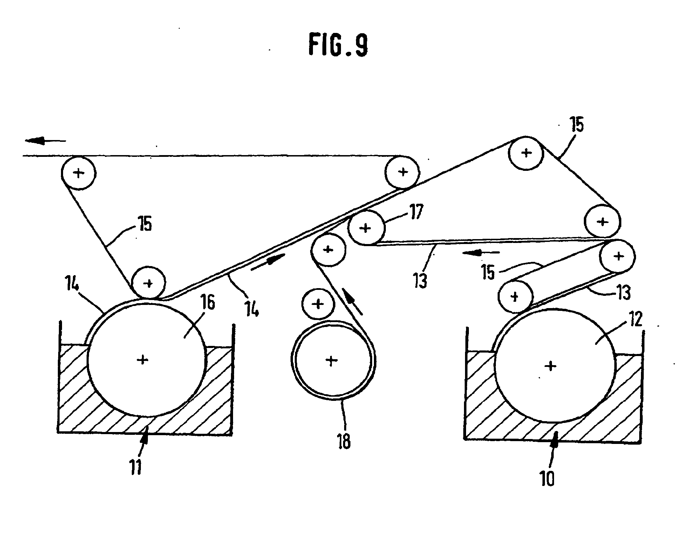

Fig. 9 zeigt die schematische Darstellung einer Doppelrundsieb-Papiermaschine, wie sie zur Herstellung des erfindungsgemäßen Sicherheitspapiers Verwendung findet. Die Anlage besteht aus zwei Rundsieb-Papiermaschinen 10 und 11. In der Papiermaschine 10 wird auf dem Rundsieb 12 eine Papierbahn 13 gebildet. Mittels der Papiermaschine 11 wird parallel zur Herstellung der Papierbahn 13 eine zweite Papierbahn 14 gefertigt. Die Papierbahnen 13 und 14 werden mittels so genannter "Abnahmefilze" 15 vom Rundsieb 12 bzw. 16 abgenommen, im Bereich der Andruckrolle 17 miteinander verbunden und zusammen den weiteren Bearbeitungsstationen (Kalander, Papierleimung etc.) der Fertigungsanlage zugeführt. Um das in den Fig. 8a und 8b dargestellte Sicherheitspapier herzustellen, wird zusätzlich im Bereich der Andruckrolle 17 gitterförmiges Folienmaterial 18 zwischen die Papierbahnen 13 und 14 zugeführt, so dass das gitterförmige Folienmaterial 18 in das fertige Sicherheitspapier eingelagert ist.

## Patentansprüche

1. Wertdokument umfassend ein Sicherheitspapier, wie Banknote, Scheck, Pass, Ausweiskarte oder dergleichen, **dadurch gekennzeichnet, dass** lediglich im Randbereich des Wertdokumentes wenigstens ein Kantenbereich zumindest teilweise mit einer Verstärkung zur Erhöhung des Einreißwiderstandes versehen ist, wobei die Verstärkung parallel zur Kante des Wertdokuments verläuft und über die Kante des Sicherheitspapiers hinausragt, bündig mit der Kante des Sicherheitspapiers abschließt oder relativ zu der Kante des Sicherheitspapiers um bis zu 5 mm eingerückt ist.

2. Wertdokument nach Anspruch 1, **dadurch gekennzeichnet, dass** die Verstärkung auf der Vorder- und/oder Rückseite des Wertdokuments aufgebracht ist.

3. Wertdokument nach Anspruch 1, **dadurch gekennzeichnet, dass** die Verstärkung zumindest teilweise in das Volumen des Wertdokuments eingebracht ist.

4. Wertdokument nach wenigstens einem der Ansprüche 1 bis 3, **dadurch gekennzeichnet, dass** die Verstärkung Spezialfasern umfasst.

5. Wertdokument nach Anspruch 4, **dadurch gekennzeichnet, dass** die Spezialfasern Synthesefasern und/oder lange Fasern und/oder schmierig gemahlene Fasern und/ oder nachbehandelte Fasern umfassen.

6. Wertdokument nach wenigstens einem der Ansprüche 1 bis 3, **dadurch gekennzeichnet, dass** die Verstärkung einen Lack umfasst.

7. Wertdokument nach Anspruch 6, **dadurch gekennzeichnet, dass** der Lack mittels Siebdruck aufgedruckt ist.

8. Wertdokument nach wenigstens einem der Ansprüche 1 bis 3, **dadurch gekennzeichnet, dass** die Verstärkung ein Folienmaterial umfasst.

9. Wertdokument nach Anspruch 8, **dadurch gekennzeichnet, dass** das Folienmaterial Polyester, Metall, Polyester-Metall-Laminat oder ein anderes reißfestes Material umfasst.

10. Wertdokument nach Anspruch 8 oder 9, **dadurch gekennzeichnet, dass** das Folienmaterial eine 15 µm dicke Polyesterfolie umfasst.

11. Wertdokument nach wenigstens einem der Ansprüche 8 bis 10, **dadurch gekennzeichnet, dass** das Folienmaterial eine Breite d von 1 bis 4 mm, vorzugsweise 2 oder 3 mm aufweist.

12. Wertdokument nach Anspruch 8, **dadurch gekennzeichnet, dass** die Verstärkung ein netzförmiges Gebilde ist.

13. Wertdokument nach Anspruch 12, **dadurch gekennzeichnet, dass** das netzförmige Gebilde Natur-, Synthese- und/oder Glasfasern umfasst.

14. Wertdokument nach wenigstens einem der Ansprüche 1 bis 13, **dadurch gekennzeichnet, dass** die Verstärkung gitterförmig oder streifenförmig ist und parallel zur Wertdokumentenkante verläuft.

15. Wertdokument nach wenigstens einem der Ansprüche 1 bis 14, **dadurch gekennzeichnet, dass** die Verstärkung lumineszierende, magnetische, elektrisch leitfähige, lichtbeugende, lichtinterferierende oder lichtpolarisierende Eigenschaften aufweist.

16. Wertdokument nach wenigstens einem der Ansprüche 1 bis 15, **dadurch gekennzeichnet, dass** das für das Wertdokument verwendete Papier aus Fasern von Einjahrespflanzen, insbesondere Baumwollfasern besteht.

17. Wertdokument nach wenigstens einem der Ansprüche 1 bis 16, **dadurch gekennzeichnet, dass** das für das Wertdokument verwendete Papier zumindest teilweise aus Kunststofffasern, vorzugsweise Polyamidfasern, besteht.

18. Wertdokument nach wenigstens einem der Ansprüche 1 bis 17, **dadurch gekennzeichnet, dass** das für das Wertdokument verwendete Papier ein Gewicht von 100g/m² aufweist.

19. Wertdokument nach wenigstens einem der Ansprüche 1 bis 18, **dadurch gekennzeichnet, dass** das Wertdokument mit beidseitigem Stichtiefdruck ausgestattet ist.

20. Wertdokument nach wenigstens einem der Ansprüche 1 bis 19, **dadurch gekennzeichnet, dass** das Wertdokument einen Aufdruck aufweist, der durch eine Beschichtung, z.B. eine Lackschicht abgedeckt ist.

21. Wertdokument nach wenigstens einem der Ansprüche 1 bis 20, **dadurch gekennzeichnet, dass** das Wertdokument eine Banknote ist.

22. Sicherheitspapier zur Herstellung eines Wertdokumentes nach wenigstens einem der Ansprüche 1 bis 21, **dadurch gekennzeichnet, dass** es lediglich im Randbereich des Wertdokumentes in wenigstens in einem bestimmten Bereich mit einer Verstärkung zur Erhöhung des Einreißwiderstandes versehen ist, wobei die Verstärkung parallel zur Kante des Wertdokuments verläuft und über die Kante des Wertdokuments hinausragt, bündig mit der Kante des Wertdokuments abschließt oder relativ zu der Kante des Wertdokuments um bis zu 5 mm eingerückt ist.

23. Sicherheitspapier nach Anspruch 22, **dadurch gekennzeichnet, dass** die Verstärkung auf der Vorder- und/oder Rückseite des Sicherheitspapiers aufgebracht ist.

24. Sicherheitspapier nach Anspruch 22 oder 23, **dadurch gekennzeichnet, dass** die Verstärkung zumindest teilweise in das Volumen des Wertdokuments eingebracht ist.

25. Sicherheitspapier nach wenigstens einem der Ansprüche 22 bis 24, **dadurch gekennzeichnet, dass** die Verstärkung Synthesefasern und/ oder lange Fasern umfasst.

26. Sicherheitspapier nach wenigstens einem der Ansprüche 22 bis 24, **dadurch gekennzeichnet, dass** die Verstärkung einen Lack umfasst.

27. Sicherheitspapier nach wenigstens einem der Ansprüche 22 bis 24, **dadurch gekennzeichnet, dass** die Verstärkung ein Folienmaterial umfasst.

28. Sicherheitspapier nach wenigstens einem der Ansprüche 22 bis 27, **dadurch gekennzeichnet, dass** die Verstärkung gitterförmig oder streifenförmig ist und parallel zur Sicherheitspapierkante verläuft.

29. Sicherheitspapier nach wenigstens einem der Ansprüche 22 bis 28, **dadurch gekennzeichnet, dass** die Verstärkung lumineszierende, magnetische, elektrisch leitfähige, lichtbeugende, lichtinterferierende oder lichtpolarisierende Eigenschaften aufweist.

30. Sicherheitspapier nach wenigstens einem der Ansprüche 22 bis 29, **dadurch gekennzeichnet, dass** das Sicherheitspapier aus Fasern von Einjahrespflanzen, insbesondere Baumwollfasern besteht.

31. Sicherheitspapier nach wenigstens einem der Ansprüche 22 bis 30, **dadurch gekennzeichnet, dass** das Sicherheitspapier ein Gewicht von 100g/m² aufweist.

32. Verfahren zur Herstellung eines Sicherheitspapiers nach wenigstens einem der Ansprüche 22 bis 31, **dadurch gekennzeichnet, dass** in einer Papiermaschine eine Papierbahn hergestellt wird und lediglich im Randbereich des Wertdokumentes wenigstens in einem Bereich des Sicherheitspapiers eine Verstärkung zur Erhöhung des Einreißwiderstandes eingearbeitet wird, wobei die Verstärkung parallel zur Kante des Wertdokuments verläuft und über die Kante des Wertdokuments hinausragt, bündig mit der Kante des Wertdokuments abschließt oder relativ zu der Kante des Wertdokuments um bis zu 5 mm eingerückt ist.

33. Verfahren zur Herstellung eines Wertdokuments nach wenigstens einem der Ansprüche 1 bis 21, **dadurch gekennzeichnet, dass** ein Sicherheitspapier nach wenigstens einem der Ansprüche 22 bis 31 bereitgestellt wird und zugeschnitten wird.

## Claims

1. A value document comprising a security paper, such as a bank note, check, passport, ID card or the like, **characterized in that** only in the margin area of the value document at least an edge area is provided at least partly with a reinforcement for increasing the tear resistance, the reinforcement extending parallel to the edge of the value document and protruding over the edge of the security paper, being flush with the edge of the security paper, or being set in relative to the edge of the security paper by up to 5 mm.

2. The value document according to claim 1, **characterized in that** the reinforcement is applied to the front and/or back of the value document.

3. The value document according to claim 1, **characterized in that** the reinforcement is at least partly incorporated into the volume of the value document.

4. The value document according to at least one of claims 1 to 3, **characterized in that** the reinforcement comprises special fibers.

5. The value document according to claim 4, **characterized in that** the special fibers comprise synthetic fibers and/or long fibers and/or wet beaten fibers and/or aftertreated fibers.

6. The value document according to at least one of claims 1 to 3, **characterized in that** the reinforcement comprises a lacquer.

7. The value document according to claim 6, **characterized in that** the lacquer is printed on by screen printing.

8. The value document according to at least one of claims 1 to 3, **characterized in that** the reinforcement comprises a foil material.

9. The value document according to claim 8, **characterized in that** the foil material comprises polyester, metal, polyester-metal laminate or another tear-resistant material.

10. The value document according to claim 8 or 9, **characterized in that** the foil material comprises a 15µm thick polyester foil.

11. The value document according to at least one of claims 8 to 10, **characterized in that** the foil material has a width d of 1 to 4 mm, preferably 2 or 3 mm.

12. The value document according to claim 8, **characterized in that** the reinforcement is a net-shaped structure.

13. The value document according to claim 12, **characterized in that** the net-shaped structure comprises natural, synthetic and/or glass fibers.

14. The value document according to at least one of claims 1 to 13, **characterized in that** the reinforcement is grid-shaped or strip-shaped and extends parallel to the edge of the value document.

15. The value document according to at least one of claims 1 to 14, **characterized in that** the reinforcement has luminescent, magnetic, electroconductive, light-diffractive, light-interfering or light-polarizing properties.

16. The value document according to at least one of claims 1 to 15, **characterized in that** the paper used for the value document consists of fibers from annuals, in particular cotton fibers.

17. The value document according to at least one of claims 1 to 16, **characterized in that** the paper used for the value document consists at least partly of plastic fibers, preferably polyamide fibers.

18. The value document according to at least one of claims 1 to 17, **characterized in that** the paper used for the value document has a weight of 100 g/m².

19. The value document according to at least one of claims 1 to 18, **characterized in that** the value document is equipped with double-sided intaglio printing.

20. The value document according to at least one of claims 1 to 19, **characterized in that** the value document has a print covered by a coating, e.g. a lacquer layer.

21. The value document according to at least one of claims 1 to 20, **characterized in that** the value document is a bank note.

22. A security paper for producing a value document according to at least one of claims 1 to 21, **characterized in that** it is provided, only in the margin area of the value document in at least a certain area, with a reinforcement for increasing the tear resistance, the reinforcement extending parallel to the edge of the value document and protruding over the edge of the value document, being flush with the edge of the value document, or being set in relative to the edge of the value document by up to 5 mm.

23. The security paper according to claim 22, **characterized in that** the reinforcement is applied to the front and/or back of the security paper.

24. The security paper according to claim 22 or 23, **characterized in that** the reinforcement is incorporated at least partly into the volume of the value document.

25. The security paper according to at least one of claims 22 to 24, **characterized in that** the reinforcement comprises synthetic fibers and/or long fibers.

26. The security paper according to at least one of claims 22 to 24, **characterized in that** the reinforcement comprises a lacquer.

27. The security paper according to at least one of claims 22 to 24, **characterized in that** the reinforcement comprises a foil material.

28. The security paper according to at least one of claims 22 to 27, **characterized in that** the reinforcement is grid-shaped or strip-shaped and extends parallel to the edge of the security paper.

29. The security paper according to at least one of claims 22 to 28, **characterized in that** the reinforcement has luminescent, magnetic, electroconductive, light-diffractive, light-interfering or light-polarizing properties.

30. The security paper according to at least one of claims 22 to 29, **characterized in that** the security paper consists of fibers from annuals, in particular cotton fibers.

31. The security paper according to at least one of claims 22 to 30, **characterized in that** the security paper has a weight of 100 g/m².

32. A method for producing a security paper according to at least one of claims 22 to 31, **characterized in that** a paper web is produced in a paper machine, and only in the margin area of the value document at least in an area of the security paper a reinforcement is incorporated for increasing the tear resistance, the reinforcement extending parallel to the edge of the value document and protruding over the edge of the value document, being flush with the edge of the value document, or being set in relative to the edge of the value document by up to 5 mm.

33. A method for producing a value document according to at least one of claims 1 to 21, **characterized in that** a security paper according to at least one of claims 22 to 31 is provided and is cut to size.

## Revendications

1. Document de valeur comprenant un papier de sécurité, tel que billet de banque, chèque, passeport, carte d'identité ou autre pièce similaire, **caractérisé en ce que**, uniquement dans la zone marginale du document de valeur, au moins une zone de bord est pourvue au moins partiellement d'un renforcement pour accroître la résistance à la déchirure, le renforcement s'étendant parallèlement au bord du document de valeur et débordant du bord du papier de sécurité, affleurant le bord du papier de sécurité ou étant en retrait de jusqu'à 5 mm par rapport au bord du papier de sécurité.

2. Document de valeur selon la revendication 1, **caractérisé en ce que** le renforcement est appliqué sur la face recto et/ou sur la face verso du document de valeur.

3. Document de valeur selon la revendication 1, **caractérisé en ce que** le renforcement est inséré au moins partiellement dans le volume du document de valeur.

4. Document de valeur selon au moins une des revendications de 1 à 3, **caractérisé en ce que** le renforcement comprend des fibres spéciales.

5. Document de valeur selon la revendication 4, **caractérisé en ce que** les fibres spéciales comprennent des fibres de synthèse et/ou des fibres longues et/ou des fibres rendues onctueuses par mouture et/ou des fibres post-traitées.

6. Document de valeur selon au moins une des revendications de 1 à 3, **caractérisé en ce que** le renforcement comprend un vernis.

7. Document de valeur selon la revendication 6, **caractérisé en ce que** le vernis est imprimé par sérigraphie.

8. Document de valeur selon au moins une des revendications de 1 à 3, **caractérisé en ce que** le renforcement comprend un matériau film.

9. Document de valeur selon la revendication 8, **caractérisé en ce que** le matériau film comprend du polyester, du métal, du stratifié de polyester-métal ou un autre matériau indéchirable.

10. Document de valeur selon la revendication 8 ou 9, **caractérisé en ce que** le matériau film comprend un film en polyester d'une épaisseur de 15 µm.

11. Document de valeur selon au moins une des revendications de 8 à 10, **caractérisé en ce que** le matériau film présente une largeur d de 1 à 4 mm, de préférence de 2 ou 3 mm.

12. Document de valeur selon la revendication 8, **caractérisé en ce que** le renforcement est une structure réticulée.

13. Document de valeur selon la revendication 12, **caractérisé en ce que** la structure réticulée comprend des fibres naturelles, de synthèse et/ou de verre.

14. Document de valeur selon au moins une des revendications de 1 à 13, **caractérisé en ce que** le renforcement a une forme en treillis ou en rubans et s'étend parallèlement au bord du document de valeur.

15. Document de valeur selon au moins une des revendications de 1 à 14, **caractérisé en ce que** le renforcement présente des propriétés luminescentes, magnétiques, électroconductrices, diffractant la lumière, interférant la lumière ou polarisant la lumière.

16. Document de valeur selon au moins une des revendications de 1 à 15, **caractérisé en ce que** le papier utilisé pour le document de valeur consiste en des fibres de plantes annuelles, notamment en des fibres de coton.

17. Document de valeur selon au moins une des revendications de 1 à 16, **caractérisé en ce que** le papier utilisé pour le document de valeur consiste au moins partiellement en des fibres de matières plastiques, de préférence en des fibres de polyamide.

18. Document de valeur selon au moins une des revendications de 1 à 17, **caractérisé en ce que** le papier utilisé pour le document de valeur présente un poids de 100g/m².

19. Document de valeur selon au moins une des revendications de 1 à 18, **caractérisé en ce que** le document de valeur est équipé d'impression en creux par gravure sur ses deux faces.

20. Document de valeur selon au moins une des revendications de 1 à 19, **caractérisé en ce que** le document de valeur comporte une impression qui est recouverte d'un revêtement, p.ex. d'une couche de vernis.

21. Document de valeur selon au moins une des revendications de 1 à 20, **caractérisé en ce que** le document de valeur est un billet de banque.

22. Papier de sécurité destiné à la fabrication d'un document de valeur selon au moins une des revendications de 1 à 21, **caractérisé en ce que**, uniquement dans la zone marginale du document de valeur, au moins dans une certaine zone, il est pourvu d'un renforcement pour accroître la résistance à la déchirure, le renforcement s'étendant parallèlement au bord du document de valeur et débordant du bord du document de valeur, affleurant le bord du document de valeur ou étant en retrait de jusqu'à 5 mm par rapport au bord du document de valeur.

23. Papier de sécurité selon la revendication 22, **caractérisé en ce que** le renforcement est appliqué sur la face recto et/ou sur la face verso du papier de sécurité.

24. Papier de sécurité selon la revendication 22 ou 23, **caractérisé en ce que** le renforcement est inséré au moins partiellement dans le volume du document de valeur.

25. Papier de sécurité selon au moins une des revendications de 22 à 24, **caractérisé en ce que** le renforcement comprend des fibres de synthèse et/ou des fibres longues.

26. Papier de sécurité selon au moins une des revendications de 22 à 24, **caractérisé en ce que** le renforcement comprend un vernis.

27. Papier de sécurité selon au moins une des revendications de 22 à 24, **caractérisé en ce que** le renforcement comprend un matériau film.

28. Papier de sécurité selon au moins une des revendications de 22 à 27, **caractérisé en ce que** le renforcement a une forme en treillis ou en rubans et s'étend parallèlement au bord du papier de sécurité.

29. Papier de sécurité selon au moins une des revendications de 22 à 28, **caractérisé en ce que** le renforcement présente des propriétés luminescentes, magnétiques, électroconductrices, diffractant la lumière, interférant la lumière ou polarisant la lumière.

30. Papier de sécurité selon au moins une des revendications de 22 à 29, **caractérisé en ce que** le papier de sécurité consiste en des fibres de plantes annuelles, notamment en des fibres de coton.

31. Papier de sécurité selon au moins une des revendications de 22 à 30, **caractérisé en ce que** le papier de sécurité présente un poids de 100g/m².

32. Procédé de fabrication d'un papier de sécurité selon au moins une des revendications de 22 à 31, **caractérisé en ce qu'**une bande de papier continue est fabriquée dans une machine à papier et **en ce que**, uniquement dans la zone marginale du document de valeur, au moins dans une zone du papier de sécurité, un renforcement est pratiqué pour accroître la résistance à la déchirure, le renforcement s'étendant parallèlement au bord du document de valeur et débordant du bord du document de valeur, affleurant le bord du document de valeur ou étant en retrait de jusqu'à 5 mm par rapport au bord du document de valeur.

33. Procédé de fabrication d'un document de valeur selon au moins une des revendications de 1 à 21, **caractérisé en ce qu'**un papier de sécurité est mis à disposition selon au moins une des revendications de 22 à 31 et est découpé.
